Europäisches Patentamt

(19) European Patent Office

Office européen des brevets

(11) Publication number: **0 252 591**
**B1**

# EUROPEAN PATENT SPECIFICATION

(45) Date of publication of the patent specification:
**28.11.90**

(51) Int. Cl.⁵: **A01B 3/42,** A01B 3/46,
A01B 15/00

(21) Application number: **87304269.1**

(22) Date of filing: **14.05.87**

(54) **An arrangement in a combined depth and transport wheel for a turning plough.**

(30) Priority: **15.05.86 NO 861927**

(43) Date of publication of application:
**13.01.88 Bulletin 88/2**

(45) Publication of the grant of the patent:
**28.11.90 Bulletin 90/48**

(84) Designated Contracting States:
**AT DE ES FR GB IT NL SE**

(56) References cited:
**FR-A- 1 219 224**
**FR-A- 2 326 847**

(73) Proprietor: **KVERNELAND KLEPP AS,**
**N-4344 Kvernaland(NO)**

(72) Inventor: **Ognedal, Einar, Brekkevn, 15,**
**N-4344 Kvernaland(NO)**

(74) Representative: **Denmark, James, c/o Bailey, Walsh &**
**Co. 5 York Place, Leeds LS1 2SD Yorkshire(GB)**

## Description

This invention relates to an arrangement in a combined depth and transport wheel for a turning plough adapted as a lifting plough, and which consequently as a whole can be lifted up from the ground by means of the three-point suspension of a tractor.

In previously known arrangements in combined depth and transport wheels for turning ploughs, the arrangement is such that when the turning plough is to be adjusted for transport, it must be turned to an intermediate position, and the depth and transport wheel must be lowered manually from depth wheel position to transport position and locked.

One such known combined depth and transport wheel arrangement is disclosed in French Patent 2326847 wherein the depth control wheel is carried by an articulated aim which is folded and swung to the transport position and in the transport position the following axis lies horizontally.

French Patent 1 219 224 discloses a depth control wheel.

It is a great disadvantage to have to turn the turning plough to the intermediate position, i.e. to a position wherein the turning plough is turned midway, since the plough bodies consequently point laterally outwards from the plough frame to which they are attached, and point slopingly downwards to the ground from the tractor pulling the plough, and rearwardly towards the depth and transport wheel. Said disadvantage consists primarily in that such a downward turning cannot be done with a somewhat larger turning plough, because the lifting-height of the tractor arms is not big enough to allow a larger turning plough to go clear of the ground when turned downwards, even if the tractor arms are lifted to their top position. Turning the turning plough upwards to half-turned position is also out of the question, because the rearwardmost portion of the plough frame in that case will come too high in relation to the ground.

The invention therefore seeks to provide an arrangement in a combined depth and transport wheel for a turning plough wherein the abovementioned disadvantages are eliminated.

Accordingly, the invention provides an arrangement in a combined depth and transport wheel for a turning plough adapted as a lifting plough, and wherein the depth and transport wheel is mounted in a single or multi-legged wheel fork formed with a pivot shaft supported in a bearing sleeve, the bearing sleeve being fastened to one end of an arm the other end of which is rotatably supported about a shaft at the rear portion of the turning plough, said shaft being oriented in parallel with the rotation shaft of the depth and transport wheel and is characterised in that in the transport position the pivot shaft is upright and serves as a pivot axis for the transport wheel.

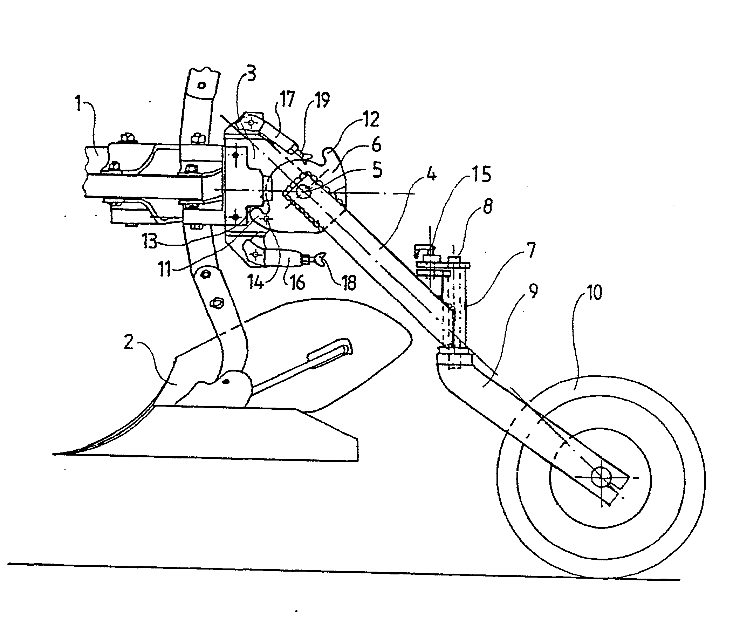

An embodiment of the invention will now be described with reference to the accompanying drawing, the single figure of which diagrammatically and in side elevation shows the rearwardmost portion of a turning plough in transport position having a device according to the invention mounted thereon.

In the drawing the reference numeral 1 denotes the frame of the turning plough, and 2 denotes one plough body of a rearwardmost pair of plough bodies of the plough. At the rear edge of the frame 1 a wheel carrier 3 is screwed-on, to which one end of an arm 4 is rotatably attached by means of a horizontal shaft 5. To the same end of the arm 4 is welded a stop body 6 symmetrically formed with respect to the shaft 5, and to the opposite end of the arm 4 is welded a bearing sleeve 7. Within the bearing sleeve 7 is supported a pivot shaft 8 rigidly connected to a single-legged wheel fork 9 on which a combined depth and transport wheel 10 is supported. The wheel fork 9 may, of course, also be multi-legged. The pivot shaft 8 is arranged substantially midway between the rotation shaft of the depth and transport wheel 10 and the shaft 5 at the rear portion of the turning plough, the said rotation shaft and the shaft 5 being mutually parallel. The stop body 6 is, at either side of the shaft 5, formed with a nose 11 respectively 12, wherein the nose 11 is adapted to co-operate wih a stop surface 13 on the wheel carrier 3 when the combined depth and transport wheel 10 is set for transport of the turning plough. When the turning plough, by means of a tractor to which the turning plough is coupled, is lifted from the ploughing position to the transport position as shown in the drawing, the arm 4 is rotated around the shaft 5 until the nose 11 of the stop body 6 is resting against the stop surface 13 of the wheel carrier 3. The bearing sleeve 7 together with the pivot shaft 8 is then extending substantially vertically. A hole 14 in the stop body 6 is now aligned with a corresponding hole in the wheel carrier 3, and a locking bolt 15 which during ploughing keeps the pivot shaft 8 locked within the bearing sleeve 7 so that the depth and transport wheel 10 is maintained locked in the ploughing direction, is moved over to the hole 14, thereby locking the arm 4 in relation to the plough frame 1 of the turning plough, at the same time allowing the pivot shaft 8 to turn freely within the bearing sleeve 7 during transport of the turning plough.

To the wheel carrier 3 is pivotally attached two depth regulators 16 and 17, each having a longitudinally adjustable catch screw 18 respectively 19 adapted to cooperate with the nose 11 respectively 2 of the stop body 6.

When the turning plough is to be rearranged from transport position to ploughing position, the locking bolt 15 is moved from its transport position in the hole 14 of the stop body 6 and the corresponding hole in the wheel carrier 3 to its place at the bearing sleeve 7 for locking the pivot shaft 8 to the bearing sleeve 7, as shown in the drawing. By means of the tractor, the turning plough is lowered to the ploughing position, the arm 4 turning around the horizontal shaft 5 until the nose 12 of the stop body 6 automatically comes to rest against the catch screw 19 of the depth regulator 17 when the ploughing starts.

When turning the turning plough, it is at first lifted by means of the tractor so that the plough bodies 2 together with the depth and transport wheel 10 come clear of the ground. During the last part of the turning, the arm 4 and the depth regulator 16 turning upwards are turning by means of the force of gravity around their pivot axes, so that the catch screw 18 of the depth regulator 16 automatically comes to rest against the nose 11 of the stop body 6 when the ploughing starts after turning. In order to cushion the turning movement of the arm 4 and consequently of the depth and transport wheel 10 during the last part of the turning, shock absorbers (not shown in the drawing) are provided.

If one wishes to change the ploughing depth, this is effected by longitudinal adjustment of the catch screws 18, 19 in the depth regulators 16, 17.

**Claims**

1. Arrangement in a combined depth and transport wheel (10) for a turning plough adapted as a lifting plough, wherein the depth and transport wheel (10) is mounted in a single or multi-legged wheel fork (9) formed with a pivot shaft (8) supported in a bearing sleeve (7), and the bearing sleeve (7) is fastened to one end of an arm (4) the other end of which is rotatably supported about a shaft (5) at the rear portion of the turning plough, and wherein the shaft (5) is oriented in parallel with the rotation shaft of the depth and transport wheel (10), characterised in that in the transport position the pivot shaft is upright and serves as a pivot axis for the transport wheel.

2. Arrangement as claimed in Claim 1 characterised in that the pivot shaft (8) is arranged substantially midway between the rotation shaft of the depth and transport wheel (10) and the shaft (5) at the rear portion of the turning plough.

3. Arrangement as claimed in Claim 1 or Claim 2, characterised in that to said ann (4) is fastened a stop body (6) adapted to co-operate with stop surfaces (13) and depth regulators (16, 17) at the rear portion of the turning plough for adjustably limiting the turning movements of the arm and of the depth and transport wheel (10).

4. Arrangement as claimed in Claim 3, characterised in that the stop body (6) is symmetrically about the axis of shaft (5).

5. Arrangement as claimed in Claim 3, characterised in that the depth regulators (16, 17) are rotatably fastened at the rear portion of the turning plough and are equipped with a longitudinally adjustable catch screw (18, 19) adapted to automatically engage the stop body (6) at the ploughing depth set.

6. Arrangement according to Claim 5, characterised in that the depth regulators (16, 17) are arranged symmetrically about the axis of shaft (5).

**Revendications**

1. Dispositif d'une roue (10) combinée pour le travail en profondeur et pour le transport (10) pour charrue brabant adaptée comme charrue élévatrice, dans lequel la roue de travail en profondeur et de transport (10) est montée dans une fourche de roue à un seul ou plusieurs bras (9) portée par un arbre de pivotement (8) monté dans un palier cylindrique (7), et le palier (7) est fixé à un bout d'un bras (4) dont l'autre bout est supporté et rotatif autour d'un arbre (5) à la partie arrière de la charrue brabant, et dans lequel l'arbre (5) est orienté parallèlement à l'arbre de rotation de la roue (10), caractérisé en ce qu'en position de transport, l'arbre de pivotement est vertical et sert d'axe de pivotement pour la roue de transport.

2. Dispositif suivant la revendication 1, caractérisé en ce que l'arbre de pivotement (8) est sensiblement au milieu entre l'arbre de rotation de la roue (10) et l'arbre (5) à l'arrière de la charrue brabant.

3. Dispositif selon la revendication 1 ou 2, caractérisé en ce qu'audit bras (4) est fixé un corps de butée (6) adapté pour coopérer avec des surfaces de butée (13) et des régulateurs de profondeur (16, 17) ) à la partie arrière de la charrue brabant pour limiter d'une manière réglable les mouvements de rotation dudit bras et de la roue de travail en profondeur et de transport (10).

4. Dispositif selon la revendication 3, caractérisé en ce que le corps de butée (6) est symétrique par rapport à l'axe de l'arbre (5).

5. Dispositif selon la revendication 3. caractérisé en ce que les régulateurs de profondeur (16, 17) sont montés rotatifs à la partie arrière de la charrue brabant et sont équipés d'une vis de prise réglable dans le sens de la longueur (18, 19) adaptées pour entrer automatiquement en contact avec le corps de butée (6) au moment où la profondeur de réglage de la charrue est atteinte.

6. Dispositif selon la revendication 5, caractérisé en ce que les régulateurs de profondeur (16, 17) sont symétriques par rapport à l'axe de l'arbre (5).

**Patentansprüche**

1. Einrichtung in einem kombinierten Tiefgang- und Transportrad (10) für einen Drehpflug, der als Hebepflug ausgelegt ist, wobei das Tiefgang- und Transportrad (10) in einer ein- oder mehrbeinigen Radgabel (9) angeordnet ist, welche mit einer Schwenkwelle (8) ausgebildet ist, die in einer Lagerhülse (7) geführt ist, wobei die Lagerhülse (7) an einem Ende eines Armes (4) befestigt ist, dessen anderes Ende drehbeweglich um eine Welle (5) am rückwärtigen Bereich des Drehpfluges geführt ist, und wobei die Welle (5) parallel mit der Drehwelle des Tiefgang- und Transportrades (10) verläuft, dadurch gekennzeichnet, daß in der Transportposition die Schwenkwelle aufrecht ist und als Schwenkachse für das Transportrad dient.

2. Einrichtung nach Anspruch 1, dadurch gekennzeichnet, daß die Schwenkwelle (8) im wesentlichen mittig zwischen der Drehwelle des Tiefgang- und Transportrades (10) und der Welle (5) am rückwärtigen Bereich des Drehpfluges angeordnet ist.

3. Einrichtung nach Anspruch 1 oder 2, dadurch gekennzeichnet, daß an dem Arm (4) ein Anschlagkörper (6) befestigt ist, der ausgelegt ist, mit Anschlagoberflächen (13) und Tiefenregulatoren (16, 17) am rückwärtigen Bereich des Drehpfluges zusammenzuwirken, um die Drehbewegungen des Armes und des Tiefgang- und Transportrades (10) einstellbar zu begrenzen.

4. Einrichtung nach Anspruch 3, dadurch gekennzeichnet, daß der Anschlagkörper (6) zu der Achse in der Welle (5) symmetrisch ist.

5. Einrichtung nach Anspruch 3, dadurch gekennzeichnet, daß die Tiefenregulatoren (16, 17) drehbeweglich am rückwärtigen Bereich des Drehpfluges befestigt sind und mit in Längsrichtung einstellbaren Fangschrauben (18, 19) versehen sind, welche automatisch mit dem Anschlagkörper (6) in der eingestellten Pflugtiefe in Anlage geraten.

6. Einrichtung nach Anspruch 5, dadurch gekennzeichnet, daß die Tiefenregulatoren (16, 17) symmetrisch zu der Achse der Welle (5) angeordnet sind.